**Europäisches Patentamt**

(19) **European Patent Office**

**Office européen des brevets**

(11) Publication number : **0 354 627 B1**

(12) # EUROPEAN PATENT SPECIFICATION

(45) Date of publication of patent specification :
**15.07.92 Bulletin 92/29**

(51) Int. Cl.⁵ : **F16L 23/14**

(21) Application number : **89202079.3**

(22) Date of filing : **11.08.89**

(54) **Method for preparing a corner profile fit for butting connection of closed channels.**

(30) Priority : **12.08.88 NL 8802010**

(43) Date of publication of application :
**14.02.90 Bulletin 90/07**

(45) Publication of the grant of the patent :
**15.07.92 Bulletin 92/29**

(84) Designated Contracting States :
**AT BE DE ES FR GB NL**

(56) References cited :
**US-A- 3 630 549**

(73) Proprietor : **De Waal, Casparus Wilhelmus**
**Leembaan 21**
**NL-5753 CW Deurne (NL)**

(72) Inventor : **De Waal, Casparus Wilhelmus**
**Leembaan 21**
**NL-5753 CW Deurne (NL)**

(74) Representative : **Hoorweg, Petrus Nicolaas et al**
**OCTROOIBUREAU ARNOLD & SIEDSMA**
**Sweelinckplein 1**
**NL-2517 GK The Hague (NL)**

## Description

The present invention relates to a method for manufacturing an angle profile for the butting coupling of channels conducting gaseous media, and having a rectangular or square cross section, and which profile comprises a front wall extending perpendicular to the wall of the channel, a back wall with a portion extending parallel to the front wall, and side walls extending perpendicular to the front wall and the back wall portion. Such profiles are used to connect mutually to butting channel parts whereto said profiles are connected with the four wall of such channel through any fitting connection means, and wherein subsequently hook shaped means are inserted into the corners, which are mutually connected by means of bolts etc.

The problem with such a connection is to avoid a leak along the profiles or the wall and the hook shaped corner pieces, wherefore often use is made of cement or cemented strip. The substantial locations of leak are in the corners but also along the flanges which are on both sides against the wall of a part of a channel.

From DE-A-2.221.312 it is already known to apply a layer of cement at the inner side of the profile which encloses the edge of the tunnel wall. This avoids a part of the leaking along the front edge of the channel parts, but not along the hook shaped corner pieces.

The aim of the invention is to alliviate said disadvantage and it provides a method in which, starting from a flat strip with a projecting fold, said strip is further folded along parallel lines, such that the front wall and the portion of the back wall are parallel and spaced apart and the side walls are formed by two flanges connected with the front wall and the back wall respectively and perpendiculare thereto, wherein a ridge of flexible material is applied to said strip before said further folding process takes place, which ridge has such a volume that in said folding process a further portion of the back wall located between the portion and the flange on the back wall causes a deformation of said ridge.

Such a method insures that a substantial part of the space between the front wall and the back wall is completely filled with sealing material so that not alone with the inserting of the channel edges but also with the legs of the hook shaped corner pieces a complete sealing is obtained.

The ridge of deformable material can be sprayed onto the strip but according to the invention it can also be peeled of a coil as a semi-product and can be applied on the strip subsequently. The supplying can take place by means of temporary glueing means, for instance a glueing strip.

The corner profile obtained with the method mentioned above thus includes a front wall extending perpendicular to the channel wall, a back wall and side walls, containing a strip of deformed flexible material, eg foamed plastic, which effects sealing.

Subsequently the present invention will be illucidated in the following description of the drawings of a preferred embodiment.

In the figure is showing:

Figure 1a, b, c several stages in the preparation of a profile according to the invention departing from a flat strip and comprising a ridge of deformable sealing material; and,

figure 2 a perspective view of a butted connection of two channel parts comprising the profile according to figure 1.

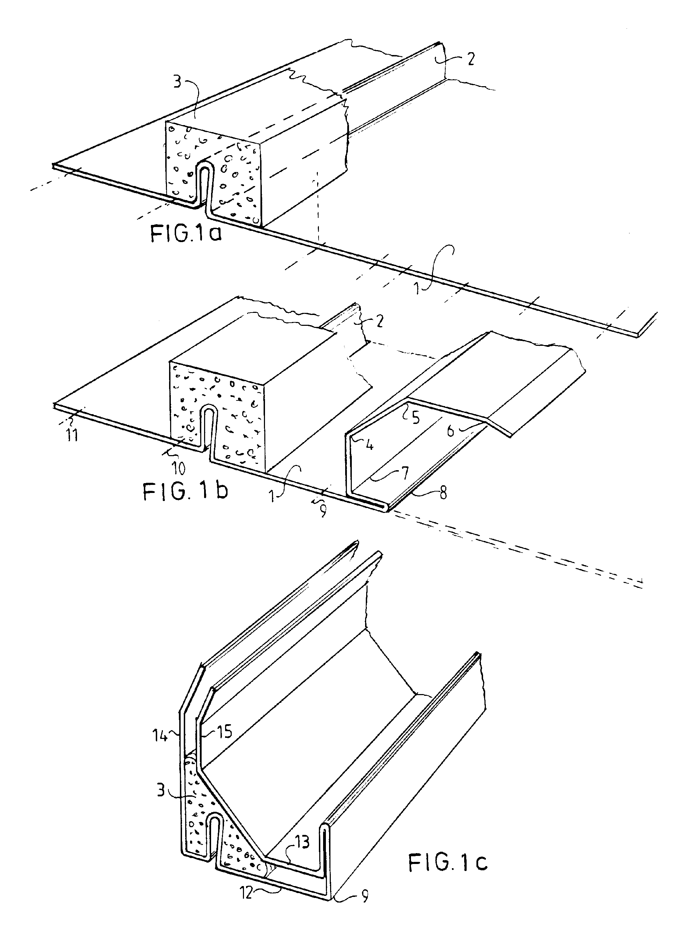

In figure 1 number 1 indicates a flat strip of material which beforehand has been provided with a folding line 2. The strip of material can have any length and can be peeled of the coil. In the shown embodiment surrounding the folding line 2 a ridge of sealing material 3 is applied, which can take place by spraying or by peeling of a strip of for instance foamed plastic material.

Subsequently the strip 1 can be folded further according to 1b in folding lines which are parallel to folding line 2, see for instance lines 4, 5 and 6. After the folding along the lines 7 and 8 the semi-product according to figure 1b is obtained.

Subsequently line 9, 10 respectively 11 can be folded after which the product according to figure 1c develops. It will be clear that in these last folding processes the edge of sealing material 3 is being deformed to a substantial triangular shape, and in which the material is biased into the space between the wall 12 and 13 and the flanges 14 and 15 respectively.

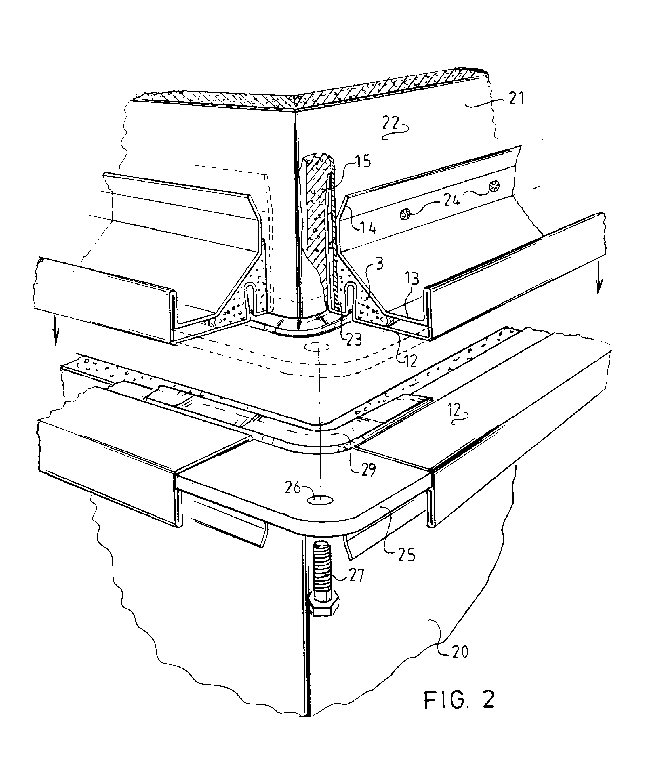

The profile according to figure 1c thus obtained can be used in the butting connection of channel parts 20, 21 in figure 2. Therefore a profile according to figure 1c is conveyed alongside the walls 22 of the channel parts with the flanges 14, 15, wherein the front edge 23 of the wall biased into the foamed plastic material 3. A permanent fixing of the profile on the wall can be obtained by the use of for instance local welds 24. The profiles according to 1c are beforehand formed to a frame by means of hook shaped corner pieces 25 comprising a bolt hole 26. Each hook piece 25 comprises a lack which is inserted into the space between the front 12, respectively the back wall 13 of the profile. The inner edge of the lack of the corner piece 25 touches the sealing means 3 in the space between said front and said back wall 12, 13. It is noted that in the left hand side in figure 2 the corner piece 25 has been eliminated for reasons of clearance, but should be present as is indicated by the dotted line.

For good sealing a sealing strip 26 is applied against the front wall 12 respectively the front side of the corner piece 25, so that after the closing of the channel parts 20, 21 against eachother by means of the bolt 27 present in the bolt holes 26 a permanent connection between the channel parts can be obtained. A gastight seal is insured by the sealing strip 29 alongside the end planes of the connection being formed by the front planes 12 and the front plane of the corner piece 25, and by the sealing strip 3, which causes a sealing between the flanges 15, 14 and the wall 22 of the channel part 21 respectively 20 and which avoid possible leaks via the corner piece 25 in the transition between the profiles of figure 1c and the cornerpieces 25.

Due to the predeformation of the sealing means 3, for instance of foam plastic is insured for a longer period of time.

## Claims

1. Method for manufacturing an angle profile for the butting coupling of channels conducting gaseous media, and having a rectangular or square cross section, and which profile comprises a front wall (12) extending perpendicular to the wall of the channel, a back wall (13) with a portion extending parallel to the front wall, and side walls extending perpendicular to the front wall and back wall portion, in which method, starting from a flat strip with a projecting fold (2), said strip is further folded along parallel lines, such that the front wall and the portion of the back wall are parallel and spaced apart and the side walls are formed by two flanges (14, 15) connected with the front wall and the back wall respectively and perpendicular thereto, wherein a ridge of flexible material is applied to said strip before said further folding process takes place, which ridge has such a volume that in said folding process a further portion of the back wall located between the portion and the flange on the back wall causes a deformation of said ridge.

2. Method according to claim 1, characterized in that said ridge is sprayed onto said strip of material.

3. Method according to claim 1, characterized in that said ridge is peeled of a stock coil as a semi-product and is applied onto said strip.

## Patentansprüche

1. Verfahren zur Herstellung eines Eckwinkelstückes für eine Stoßverbindung von Kanälen, die ein gasförmiges Medium leiten und einen rechteckigen oder quadratischen Querschnitt besitzen, wobei das Profil des Eckstückes eine Vorderwand (12), die senkrecht zur Kanalwandung verläuft, eine Rückwand (13) mit einem abschnitt, der parallel zur Frontwand verläuft, und Seitenwände aufweist, die senkrecht zur Vorderwand und zu dem Rückwandabschnitt verlaufen, bei welchem Verfahren von einem flachen Band mit einer vorspringenden Faltung (2) ausgegangen wird und das Band weiter längs paralleler Linien derart gefaltet wird, daß die Vorderwand und der beschnitt der Rückwand parallel und im bestand zueinander und zu den Seitenwänden durch zwei Flansche (14, 15) gebildet werden, die mit der Frontwand bzw. der Rückwand senkrecht hierzu verbunden sind, wobei eine Wulst aus flexiblem Material auf das Band aufgebracht wird, bevor die weitere Faltung erfolgt, wobei die Wulst ein solches Volumen hat, daß bei dem Faltverfahren ein weiterer Teil der Rückwand zwischen dem beschnitt des Flansches auf der Rückseite eine Deformation der Wulst bewirkt.

2. Verfahren nach Anspruch 1, dadurch gekennzeichnet, daß die Wulst auf das Bandmaterial aufgesprüht wird.

3. Verfahren nach Anspruch 1, dadurch gekennzeichnet, daß die Wulst von einer Vorratsspule als Halbfertigprodukt abgewickelt und auf das Band aufgebracht wird.

## Revendications

1. Procédé pour fabriquer un profilé angulaire permettant la fixation bout à bout de conduits véhiculant des gaz, et présentant une section rectangulaire ou carrée, le profilé comprenant une paroi avant (12) s'étendant perpendiculairement à la paroi du conduit, une paroi arrière (13) dont une partie est parallèle à la paroi avant, et des parois latérales perpendiculaires à la paroi avant et à ladite partie de paroi arrière, caractérisé en ce que l'on prend une bande plate pourvue d'un pli saillant (2), on plie ensuite la bande le long de lignes parallèles, de telle sorte que la paroi avant et ladite partie de paroi arrière soient parallèles et séparées et que les parois latérales soient formées par deux brides (14,15) reliées respectivement à la paroi avant et à la paroi arrière et perpendiculaires à ces dernières, un cordon (3) de matériau flexible étant appliqué sur ladite bande avant de procéder à ladite opération de pliage supplémentaire, ledit cordon ayant un volume tel que, dans ladite opération de pliage, une autre partie de la paroi arrière située entre la partie et la bride sur la paroi arrière crée une déformation dudit cordon.

2. Procédé selon la revendication 1, caractérisé en ce que ledit cordon est vaporisé sur ladite bande de matériau.

3. Procédé selon la revendication 1, caractérisé en ce que ledit cordon est déroulé d'une bobine de stockage sous forme d'un produit semi-fini et est appliqué sur ladite bande.

FIG.1a

FIG.1b

FIG.1c

FIG. 2